Europäisches Patentamt

European Patent Office

Office européen des brevets

(19)

(11) Veröffentlichungsnummer: **0 300 072 B1**

(12) **EUROPÄISCHE PATENTSCHRIFT**

(45) Veröffentlichungstag der Patentschrift: **27.12.91**

(51) Int. Cl.⁵: **A63H 29/22**, A63H 17/26

(21) Anmeldenummer: **87110587.0**

(22) Anmeldetag: **22.07.87**

(54) **Chassis für Fahrspielzeug.**

(43) Veröffentlichungstag der Anmeldung:
**25.01.89 Patentblatt 89/04**

(45) Bekanntmachung des Hinweises auf die
Patenterteilung:
**27.12.91 Patentblatt 91/52**

(84) Benannte Vertragsstaaten:
**AT BE CH DE ES FR GB GR IT LI LU NL SE**

(56) Entgegenhaltungen:
**GB-A- 1 303 241**
**US-A- 3 000 999**
**US-A- 3 501 863**

(73) Patentinhaber: **Hesse, Kurt**
**Waldstrasse 36**
**W-8510 Fürth(DE)**

(72) Erfinder: **Hesse, Kurt**
**Waldstrasse 36**
**W-8510 Fürth(DE)**

(74) Vertreter: **Hafner, Dieter, Dr.rer.nat.,**
**Dipl.-Phys.**
**Ostendstrasse 132**
**W-8500 Nürnberg 30(DE)**

## Beschreibung

Die Erfindung betrifft ein Chassis für ein Fahrspielzeug mit einem durch einen Elektromotor über ein Untersetzungsgetriebe drehbaren Antriebsräderpaar und einem Stützräderpaar, wobei das Chassis eine durch einen Schalter an den Elektromotor anlegbare Stromquelle, z B. Batterie, aufnimmt und als Träger einer Karosserie dient und einen oben offenen Chassiskasten aufweist, der einen Aufnahmekasten für die Stromquelle aufnimmt und mit außenseitigen Stromquellenkontakten versehen ist.

Ein derartiges Chassis ist bereits in der GB-A-1 303 241 beschrieben. Der Aufnahmekasten ist hierbei mit dem Chassiskasten lösbar verbunden aber im Chassiskasten unbeweglich angeordnet und beinhaltet die Stromquelle in Form einer Batterie sowie den Elektromotor. Stromquelle und Elektromotor stehen über eine Verdrahtung miteinander in Verbindung, wobei ein per Hand zu betätigender Schalter, der an einer Abdeckplatte des Aufnahmekastens angeordnet ist, in die Verdrahtung eingeschaltet ist. Aufgrund der Verdrahtung der einzelnen Teile untereinander ist der herstellungstechnische Aufwand und damit die Produktionskosten sehr hoch.

Die Aufgabe der Erfindung besteht darin, ein gattungsgemäßes Chassis zu schaffen, welches den fertigungstechnischen Zusammenbau erheblich erleichtert bzw. vereinfacht.

Erfindungsgemäß wird diese Aufgabe durch ein gattungsgemäßes Chassis gelöst, welches dadurch gekennzeichnet ist, daß der Chassiskasten durch einen lösbar fest aufsteckbaren Deckel verschließbar ist und daß der Aufnahmekasten für die Stromquelle in dem Chassiskasten quer verschieblich aufgenommen ist und aus einer mittleren Trennstellung zu Umläufen des Elektromotors in der einen oder anderen Drehrichtung als Polumschalter mit mit dem Elektromotor in Verbindung stehende Kontaktschienen kontaktiert.

Bei der Erfindung wirkt folglich der Aufnahmekasten selbst als Schalter, was eine erheblich Vereinfachung, sowohl was die Konstruktion anbelangt als auch den fertigungstechnischen Aufwand beim Zusammenbau des Fahrspielzeugs betrifft, begründet.

Die abhängigen Ansprüche betreffen zweckmäßige Ausgestaltungen der Erfindung.

Zweckmäßig sind die Anordnung einer an den Elektromotor anliegenden Kontaktschiene mit mittigem Doppelkontakt und einer am Elektromotor anliegenden Kontaktschiene mit zu beiden Seiten neben dem Doppelkontakt angeordneten Einzelkontakten vorgesehen. Hierdurch ermöglichen einfache Verschiebebewegungen des bevorzugt durch chassisfeste Leisten geführten und abgestützten Aufnahmekastens, der in seiner Größe die Stromquelle nur geringfügig überragt aus einer die Ruhestellung bestimmenden Trennstellung zur einen oder anderen Seite Drehrichtungsänderungen des Elektromotors und dadurch Vorwärts- bzw. Rückwärtsfahrbewegungen des Fahrspielzeugs. Es versteht sich, daß die Drehrichtungsumkehr des Elektromotors auch dazu genutzt werden kann, zwei verschieden große gleichsinnige Getriebestufen anzutreiben, die einen schnelleren und einen langsameren Geschwindigkeitsbereich für das Fahrspielzeug ergeben. Nach bevorzugter Ausführung greifen die Kontaktschienen mit an abgebogenen federnden geraden Enden angeordneten Kontakten an der Aufnahmekastenwandung und den Stromquellenkontakten an.

In Ausgestaltung des Chassis ist vorgesehen, den Aufnahmekasten für die Stromquelle durch einen manuell abschwenkbaren Hebeltrieb im Chassis querverschieblich auszubilden, dessen einer Hebelarm hierzu mit einem Zapfen in einer Längsausnehmung des Aufnahmekastens eintaucht und dessen anderen Hebelarm als Grifteil das Chassis, z. B. nach vorne überragt. Die Betätigung des Hebeltriebes zu Umschaltungen kann so vom vorderen Fahrzeugende her erfolgen. Es entspricht der Erfindung, daß der Hebeltrieb auch in beliebig anderer Weise, z. B. durch ein in einer Ausnehmung des Hebeltriebs formschlüssig einsteckbaren Werkzeugs von oben her verschwenkbar ist. Außerdem ist vorgesehen, den Hebeltrieb mit einer zu einer Seite abstehenden Anformung zu versehen, die mit einem Zapfen die Unterseite des Chassis überragt, um so zu selbsttätigen Abschwenkungen des Hebeltriebs mit als Anlaufkörper dienende fahrbahnfeste Hindernisse zur Wirkung zu kommen. Die letztgenannte Betätigungsart ermöglicht durch Anlaufen des Zapfens an Hindernissen Fahrrichtungsänderungen.

In Ausgestaltung des Chassis ist noch vorgesehen, daß eine Kontaktschiene durch zwei einander übergreifende Kontaktschienenabschnitte gebildet ist und daß durch Abbiegen eines dieser Kontaktschienenabschnitte eine selbsttätige Trennung von Stromquelle und Elektromotor zum Zwekke der Unterbrechung der Verbindung von Stromquelle und Elektromotor erzielbar ist. Das Abbiegen des Kontaktschienenabschnitts kann bevorzugt mittels eines Exzenters oder einer Wippe erfolgen, die mit einem nach unten das Chassis überragenden Zapfen durch ein fahrbahnfestes Hindernis verschwenkbar sind. Das Hindernis kann durch einen Anschlag oder Nocken, z. B. vor einer Ampel der Fahrbahnanlage gebildet sein. Durch Anlaufen des Zapfens erfolgt ein selbsttätiges Anhalten des Fahrspielzeugs durch Stromzufuhrunterbrechung.

Ferner sind Maßnahmen zur sicheren Fixierung der Stromquelle, z. B. Stabbatterien im Aufnahmekasten vorgesehen. Hierzu kann der Aufnahmekasten in den Längswänden abbiegbar angeschnittene Rastenkörper aufweisen. An den Rastenkörpern angeordnete Schrägflächen gestatten dabei beim Eindrücken und/oder Entnehmen der Stabbatterien deren selbsttätiges Zurückschwenken.

Schließlich sieht die Erfindung noch vor, daß der Deckel des Chassiskastens auf der dem Aufnahmekasten abgewandten Seite eine Anzahl zylindrischer Hülsen in Reihe fest aufweist und daß durch Eintauchen von an ansteckbaren Karosserien angeordneten Zapfen od. dgl. in diese Hülsen die Karosserien mit dem Deckel abnehmbar verbindbar sind. Die Hülsen ermöglichen am gleichen Chassis beliebig geformte Karosserien zur Bildung unterschiedlicher Fahrzeuge zu befestigen.

Die Erfindung ist anhand eines Ausführungsbeispiels in der Zeichnung erläutert. Hierin bedeuten:

Fig. 1    einen Chassis, offen, komplett in Draufsicht, teilweise im Schnitt,

Fig. 2    einen Chassiskasten in Draufsicht,

Fig. 3    einen Chassis der Fig. 1 in Seitenansicht,

Fig. 4    einen Aufnahmekasten in Draufsicht,

Fig. 5    einen Schnitt nach der Linie V-V der Fig. 4 und

Fig. 6    einen Aufnahmekasten in Seitenansicht.

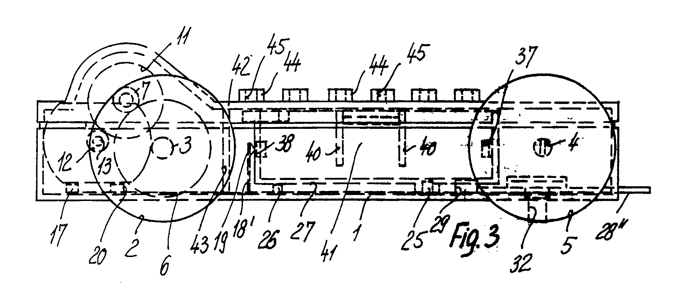

In den Fig. ist mit 1 ein Chassiskasten mit prismatischer Ausbildung bezeichnet. Im Chassiskasten 1 sind ein Antriebsräderpaar 2 mittels einer Antriebswelle 3 und an Zapfen 4 Stützräder 5 drehbar gelagert. Die Antriebswelle 3 trägt ein Getrieberad 6, das mit einem auf einer Welle 8 in Wandungen 9, 10 des Chassiskastens gelagerten Ritzel 7 kämmt. Auf der Welle 8 ist ein weiteres Getrieberad 11 angeordnet, das mit einem Ritzel 12 auf der Welle 13 eines Elektromotors 14 in Verbindung steht. Der Elektromotor 14 ist durch die Wandungen 9 und 15 vermittels Anformungen 16 gestützt. Der Elektromotor 14 liegt an einem Kontakt 17 an, der am Ende einer Kontaktschiene 18 ausgebildet ist, deren anderes Ende 18′ Kontakte 19 trägt. Die Kontakte 19 sind, wie Fig. 3 zeigt, an aufgebogenen Enden 18′ angeordnet.

Weiter steht der Elektromotor 14 mit einem Kontakt 20 in Verbindung, der an einer Kontaktschiene 21 angeordnet ist, die ihrerseits abbiegbar mit einer Kontaktschiene 22 verbunden ist, die weitere Kontakte 23 und 24 aufweist. Die Kontaktschienen 18, 21, 22 sind durch Nieten oder verpreßten Halteansätzen mit dem Chassiskasten 1 fest verbunden.

Weiter weist der Chassiskasten 1 Führungsleisten 25 und eine Stützleiste 26 für einen Aufnahmekasten 27 für Batterien 36 auf. Der Aufnahmekasten 27 ist querverschiebbar im Chassiskasten 1 ausgebildet, wozu ein Hebeltrieb 28 mit einem auf dem Hebelarm 28′ angeordneten Zapfen 29 in eine Nut 30 des Aufnahmekastens 27 von unten her eintaucht. Der Hebeltrieb 28 überragt mit einem Hebelarm 28″ den Chassiskasten 1 nach vorne. Der Hebelarm 28″ dient als Griffteil. Durch Abschwenken des Hebeltriebs 28 erfolgen Verschiebebewegungen des Aufnahmekastens 27 zur einen oder anderen Seite des Chassiskasten 1. Der Hebeltrieb 28 weist weiter eine Anformung 31 auf, die einen Zapfen 32 trägt, der den Chassiskasten nach unten überragt und mit Hindernissen in der Fahrbahn (nicht gezeigt) zur Wirkung bringbar ist. Beim Anlaufen des Zapfens 32 an das Hindernis erfolgen selbsttätige Abschwenkungen des Aufnahmekastens.

Außerdem ist eine exzentrische Wippe 33 in Stützen 34 im Chassiskasten 1 drehbeweglich gelagert, die mittels eines wippenfesten Zapfens 35 die Unterseite des Chassiskastens 1 überragt. Durch Anlaufen des Zapfens 35 an ein weiteres Hindernis erfolgen Abschwenkungen der Wippe 33 und über diese Abbiegungen der Kontaktschiene 21 zu Unterbrechungen der Verbindung von Batterien und Elektromotor 14. Der Aufnahmekasten 27 nimmt beim Ausführungsbeispiel zwei Stabbatterien 36 auf, die über ein Brückenglied 37 in Reihe geschaltet sind und an aufnahmekastenfeste Kontakte 38, 39 anliegen. Die Kontakte 38 und 39 kommen in den Arbeitsstellungen mit den Kontakten 19, 23, 24 der Kontaktschienen 18 bzw. 22 zur Wirkung.

Der Aufnahmekasten 27 weist durch Einschnitte 40 gebildete Rastenkörper 41 auf, die die Stabbatterien 36 im Aufnahmekasten 27 fixieren. Der Chassiskasten 1 ist oben durch einen Deckel 42 übergriffen. Der Deckel 42 ist mit einer Wand 43 versehen, die in den Chassiskasten 1 eintaucht um den elektrischen Teil des Chassis vom mechanischen Teil des Chassis zu trennen. Die Wand 43 erstreckt sich hierzu annähernd bis zur Bodenfläche des Chassiskastens 1.

Auf seiner Oberseite trägt der Deckel 42 fest Hülsen 44, in deren Mittelöffnung 45 Haltezapfen von ansteckbaren Karosserien (nicht gezeigt) einbringbar sind. Durch Eingreifen der Haltezapfen in Mittelöffnungen 45 erfolgt eine Festlegung der jeweiligen Karosserie am Deckel 42 und damit am Chassis. Die Möglichkeit zur Festlegung von Karosserien gibt die Voraussetzung um unter Beibehaltung des Chassis beliebig geformte und gestaltete Karosserien zur Bildung eines beliebigen Fahrspielzeugs zu verwenden.

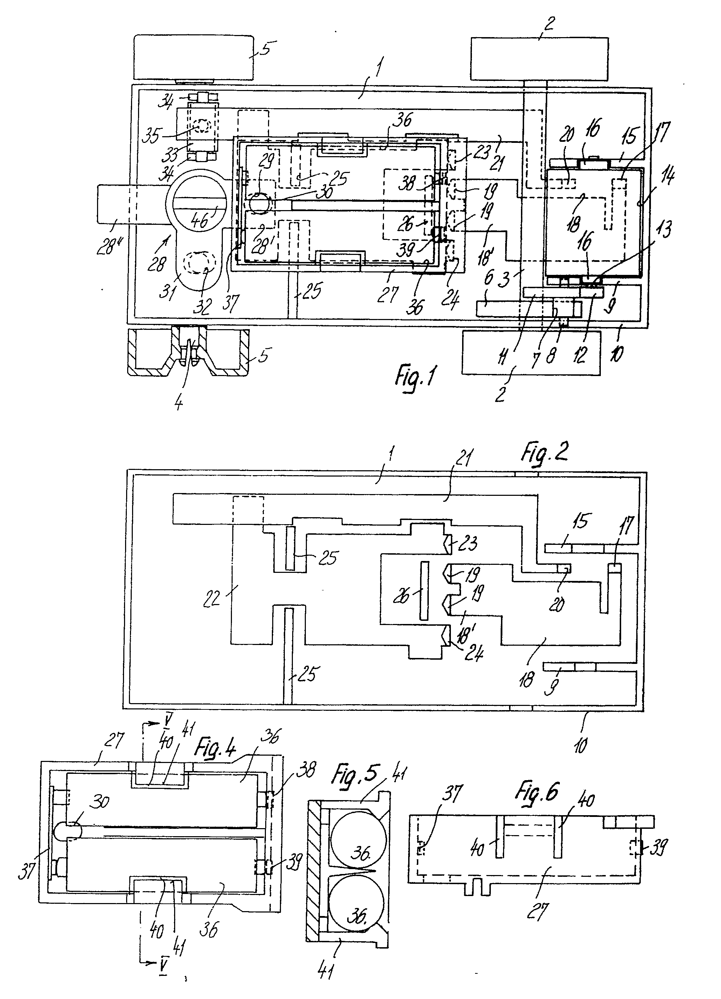

In Fig. 1 nimmt der Aufnahmekasten 27 die Ruhestellung ein. Hierbei sind die Kontakte 38, 39 von den Kontakten 23 und 24 getrennt. Durch Verschwenken des Hebeltriebs 28, z. B. in Uhrzeigerdrehrichtung kommt der Kontakt 38 an einen der Kontakte 19 der Kontaktschiene 18 und der Kontakt 39 an den Kontakt 24 der Kontaktschiene 22 zur Anlage. Der Elektromotor dreht dadurch, z. B. in einer vorbestimmten Drehrichtung zu Vorwärtsfahrten. Durch Abschwenken des Hebeltriebs 28 entgegen der Uhrzeigerdrehrichtung wird der Kontakt 39 mit dem anderen der Kontakte 23 der Kontaktschiene 18 in Verbindung gebracht und der Kontakt 38 an den Kontakt 23 der Kontaktschiene 22 angelegt, wodurch eine Umpolung für den Elektromotor 14 zur entgegengesetzten Drehrichtung bewirkt wird.

Über die Dauer von Fahrbewegungen kann der Zapfen 35 der Wippe 33 an ein fahrbahnfestes Hindernis anlaufen und durch Abschwenken der Kontaktschiene 21 von der Kontaktschiene 22 eine Unterbrechung der Stromversorgung für den Elektromotor 14 gleichgültig der Drehrichtung erfolgen.

Bei Anlaufen des Zapfens 32 an ein Fahrbahnhindernis wird eine selbsttätige Drehrichtungsumkehr des Elektromotors 14 und damit eine Umkehrung der Fahrrichtung des Fahrspielzeugs bewirkt.

Die Fig. 5 zeigt, daß die Rastenkörper 41 für die Batterien mit Schrägflächen 42 versehen sein können, die das Entnehmen bzw. Einsetzen der Stabbatterien durch selbsttätiges Zurückschwenken nach außen erleichtern.

## Patentansprüche

1. Chassis für ein Fahrspielzeug mit einem durch einen Elektromotor über ein Untersetzungsgetriebe drehbaren Antriebsräderpaar und einem Stützräderpaar, wobei das Chassis eine durch einen Schalter an den Elektromotor anlegbare Stromquelle, z. B. eine Batterie, aufnimmt und als Träger einer Karosserie dient und einen oben offenen Chassiskasten (1) aufweist, der einen Aufnahmekasten (27) für die Stromquelle (36) aufnimmt und mit außenseitigen Stromquellenkontakten (38, 39) versehen ist, dadurch gekennzeichnet, daß der Chassiskasten durch einen lösbar fest aufsteckbaren Deckel (42) verschließbar ist und daß der Aufnahmekasten (27) für die Stromquelle (36) in dem Chassiskasten (1) quer verschieblich aufgenommen ist und aus einer mittleren Trennstellung zu Umläufen des Elektromotors (14) in der einen oder anderen Drehrichtung als Polumschalter mit mit dem Elektromotor (14) in Verbindung stehende Kontaktschienen (18, 21, 22) kontaktiert.

2. Chassis nach Anspruch 1, dadurch gekennzeichnet, daß der Aufnahmekasten (27) durch chassisfeste Leisten (25, 26) quer geführt und in der Senkrechten gestützt ist.

3. Chassis nach Anspruch 1, dadurch gekennzeichnet, daß die Kontaktschienen (18, 22) mit an federnd abgebogenen Enden angeordneten Kontakten (19, 23, 24) an der Aufnahmekastenwandung und den Stromquellenkontakten (38, 39) anliegen.

4. Chassis nach Anspruch 2, gekennzeichnet durch die Anordnung eines über eine Kontaktschiene (18) an den Elektromotor (14) anliegenden mittigen Doppelkontakt (19) und zu beiden Seiten im Abstand neben dem Doppelkontakt (19) angeordneten Einzelkontakten (23, 24), die über die Kontaktschienen (22, 21) mit dem Elektromotor (14) verbunden sind.

5. Chassis nach Anspruch 1 oder 4, dadurch gekennzeichnet, daß der Aufnahmekasten (27) durch einen manuell abschwenkbaren Hebeltrieb (28) im Chassis quer verschieblich ausgebildet ist, dessen einer Hebelarm (28') mit einem Zapfen (29) in einer Längsausnehmung (30) des Aufnahmekastens (27) eintaucht und dessen anderer Hebelarm (28'') als Griffteil den Chassiskasten (1) nach vorne überragt.

6. Chassis nach Anspruch 5, dadurch gekennzeichnet, daß der Hebeltrieb (28) mittels eines in einer Ausnehmung (46) formschlüssig einsteckbaren Werkzeugs von oben her verschwenkbar ist.

7. Chassis nach Anspruch 5, dadurch gekennzeichnet, daß der Hebeltrieb (28) eine zu einer Seite abstehende Anformung (31) aufweist, die mit einem Zapfen (32) die Unterseite des Chassiskasten (1) überragt, der zu selbsttätigen Abschwenkungen des Hebeltriebs (28) mit als Anlaufkörper dienende fahrbahnfeste Hindernisse zur Wirkung bringbar ist.

8. Chassis nach Anspruch 1, dadurch gekennzeichnet, daß die Kontaktschienen (21, 22) mit Vorspannung einander übergreifen und kontaktieren und daß durch Abbiegen der Kontaktschiene (21) eine selbsttätige Trennung von Stromquelle (36) und Elektromotor (14) erzielbar ist.

9. Chassis nach Anspruch 8, dadurch gekennzeichnet, daß die Abbiegungen der Kontaktschiene (21) durch einen Exzenter oder eine Wippe erfolgen, die mit einem nach unten den Chassiskasten (1) überragenden Zapfen (35) durch Anlaufen an ein fahrbahnfestes Hindernis verschwenkbar sind.

10. Chassis nach Anspruch 5, 6 oder 7, dadurch gekennzeichnet, daß der Aufnahmekasten (27) in den Längswänden abbiegbar angeschnittene Rastenkörper für die Stromquelle (36), z. B. Stabbatterien aufweist.

11. Chassis nach Anspruch 1, dadurch gekennzeichnet, daß der Deckel (42) auf der dem Aufnahmekasten (27) abgewandten Seite eine Anzahl zylindrische Hülsen (44) in Reihe fest aufweist und daß durch Eintauchen von an ansteckbaren Karosserien angeordneten Zapfen, in die Mittelöffnungen (45) der Hülsen die Karosserien mit dem Deckel (42) abnehmbar verbunden sind.

## Claims

1. Chassis for a toy vehicle with a pair of drive wheels, which can be rotated by an electromotor via a reduction transmission, and a pair of supporting wheels, wherein the chassis accommodates a current source, for example a battery, which can be applied to the electromotor via a switch, serves as support for a body and comprises a chassis box (1) which is open at the top and accommodates a receiving box (27) for the current source (36) and is provided with external current source contacts (38, 39), characterised in that the chassis box can be closed by a lid (42) which can be rigidly inserted in a detachable manner, and in that the receiving box (27) for the current source is accommodated in the chassis box (1) in a manner such that it can be transversely displaced and, from a centre separating position, in the form of a pole reverser, it contacts contact rails (18, 21, 22) which are connected to the electromotor (14) in order to rotate the electromotor (14) in one or other direction of rotation.

2. Chassis according to claim 1, characterised in that the accommodating box (27) is guided transversely by means of strips (25, 26) which are fixed on the chassis, and is supported in the vertical direction.

3. Chassis according to claim 1, characterised in that the contact rails (18, 22) abut by means of contacts (19, 23, 24), which are disposed on resiliently inclined ends against the receiving box wall and against the current source contacts (38, 39).

4. Chassis according to claim 2, characterised by the arrangement of a central double contact (19) which is applied against the electromotor (14) via a contact rail (18), and single contacts (23, 24), which are disposed on both sides at a distance adjacent the double contact (19) and are connected to the electromotor (14) via the contact rails (22, 21).

5. Chassis according to claim 1 or 4, characterised in that the receiving box (27) is formed so as to be transversely displaceable by a manually pivotable lever drive (28) in the chassis, a pin (29) of one lever arm (28') of which lever drive penetrates a longitudinal recess (30) of the receiving box (27) and the other lever arm (28'') of which projects forwards over the chassis box (1) in the form of a handle part.

6. Chassis according to claim 5, characterised in that the lever drive (28) can be pivoted from above by means of a tool which can be inserted in a recess (46) in a form-locking manner.

7. Chassis according to claim 5, characterised in that the lever drive (28) comprises a projection (31) which projects at one side and of which a pin (32) projects over the lower side of the chassis box (1) which can be activated to pivot automatically the lever drive (28) downwards by means of obstacles which are fixed on the track and serve as stops.

8. Chassis according to claim 1, characterised in that the contact rails (21, 22) overlap and contact one another in a pre-stressed manner, and in that, by deflecting the contact rail (21), the current source (36) and electromotor (14) can be automatically separated.

9. Chassis according to claim 8, characterised in that the contact rail (21) is deflected by an eccentric or a rocker which can be pivoted by means of a pin (35), which projects downwardly over the chassis box (1), by running up against an obstacle which is fixed on the track.

10. Chassis according to claims 5, 6 or 7, characterised in that the receiving box (27) comprises in its longitudinal walls locking members, which slope steeply such that they can be curved, for the current source (36), for example torch batteries.

11. Chassis according to claim 1, characterised in that the lid (42) comprises on the side which faces away from the receiving box (27) a number of cylindrical sleeves (44) which are fixed in a row, and in that, by inserting pins, which are disposed on insertable bodies, into the central openings (45) of the sleeves the bodies are connected to the lid (42) in a removable manner.

## Revendications

1. Châssis pour véhicule-jouet, comportant une paire de roues motrices, agencées de façon à pouvoir être entraînées en rotation par un moteur électrique par l'intermédiaire d'un engrenage réducteur de vitesse, et une paire de roues d'appui, tandis que le châssis sert à loger une source de courant, par exemple des piles, qui est agencée de façon à pouvoir être connectée au moteur électrique par l'intermédiaire d'un inter-rupteur, et qu'il sert de support pour une carrosserie et comporte un boîtier de châssis (1), ouvert vers le haut, qui sert à loger un boîtier (27) de logement de la source de courant (36) et est pourvu de contacts de source de courant (38, 39) disposés extérieurement, caractérisé en ce que le boîtier de châssis est agencé de façon à pouvoir être fermé par un couvercle (42) emboîtable d'une manière fixe, mais amovible et en ce que le boîtier (27) de logement de la source de courant (36) est logé dans le boîtier de châssis (1) de façon à pouvoir se déplacer transversalement en translation et, à partir d'une position centrale de coupure de circuit, vient au contact de pistes de contact (18, 21, 22), qui sont reliées au moteur électrique (14), de façon à faire tourner le moteur électrique (14) dans un sens de rotation ou dans l'autre, en servant ainsi d'inverseur de polarité.

2. Châssis suivant la revendication 1, caractérisé en ce que le boîtier de logement (27) est guidé transversalement par des nervures (25, 26) solidaires du châssis et est en appui dans la direction verticale.

3. Châssis suivant la revendication 1, caractérisé en ce que, par des contacts (19, 23, 24), situés à des extrémités repliées de manière à pouvoir jouer élastiquement, les pistes de contact (18, 22) sont en appui sur la paroi du boîtier de logement et sur les contacts de source de courant (38, 39).

4. Châssis suivant la revendication 2, caractérisé par l'agencement, d'une part, d'un contact central double (19), connecté au moteur électrique (14) par l'intermédiaire d'une piste de contact (18), et, d'autre part, de contacts individuels (23, 24) disposés à côté du contact double (19), de part et d'autre et à distance de ce dernier, et reliés au moteur électrique (14) par l'intermédiaire des pistes de contact (22, 21).

5. Châssis suivant la revendication 1 ou 4, caractérisé en ce que le boîtier de logement (27) est agencé de façon à pouvoir être déplacé transversalement dans le châssis au moyen d'un mécanisme à levier (28) qui est agencé de façon qu'on puisse le faire pivoter à la main et dont un bras de levier (28') s'engage par un doigt (29) dans une boutonnière (30) du boîtier de logement (27), son autre bras de levier (28") dépassant du boîtier de châssis (1) vers l'avant de façon à servir d'organe de préhension.

6. Châssis suivant la revendication 5, caractérisé en ce que le mécanisme à levier (28) est agencé de façon qu'on puisse le faire pivoter d'en haut au moyen d'un outil emboîtable par complémentarité de formes dans un évidement (46).

7. Châssis suivant la revendication 5, caractérisé en ce que le mécanisme de levier (28) comporte une partie venue de matière (31) faisant saillie sur un côté et dépassant de la face inférieure du boîtier de châssis (1) par un doigt (32) qui est agencé de façon à pouvoir être mis en position active par un obstacle fixe situé sur la piste de roulement et servant d'organe de soulèvement, en vue de provoquer des pivotements automatiques du mécanisme à levier (28).

8. Châssis suivant la revendication 1, caractérisé en ce que les pistes de contact (21, 22) viennent dans le domaine l'une de l'autre et coopèrent l'une avec l'autre sous une certaine précontrainte et en ce qu'un flexion de la piste de contact (21) permet d'obtenir une coupure automatique du circuit de la source de courant (36) et du moteur électrique (14).

9. Châssis suivant la revendication 8, caractérisé en ce que les flexions de la piste de contact (21) sont réalisées au moyen d'un excentrique ou d'une bascule qui est agencé de façon à pouvoir pivoter au moyen d'un doigt (35) dépassant du boîtier de châssis (1) vers le bas lorsque ce doigt (35) s'élève sur un obstacle fixe situé sur la voie de roulement.

10. Châssis suivant la revendication 5, 6 ou 7, caractérisé en ce que le boîtier de logement (27) comporte des organes d'enclenchement qui permettent de maintenir la source de courant (36), par exemple des piles pour lampe-torche, et qui sont réalisés par découpage dans les parois longitudinales de façon à pouvoir subir une flexion.

11. Châssis suivant la revendication 1, caractérisé en ce que, sur sa face opposée au boîtier de logement (27), le couvercle (42) comporte un certain nombre de douilles cylindriques (44) fixes disposées en rangée et en ce que, par emboîtement, dans les orifices centraux (45) des douilles, de doigts disposés sur des carrosseries agencées de façon à pouvoir être montées par enfichement, les carrosseries sont rendues solidaires du couvercle (42) d'une manière amovible.

Fig.1

Fig.2

Fig.4

Fig.5

Fig.6

Fig. 3